# FASCICULE DE BREVET EUROPEEN

(11) **EP 3 049 795 B1**
(45) Date de publication et mention de la délivrance du brevet: **04.03.2020**
(21) Numéro de dépôt: 14771925.6
(22) Date de dépôt: 24.09.2014
(51) Int. Cl.: G01N 21/954, G01M 17/02

(54) **DISPOSITIF D'ACQUISITION D'IMAGES DESTINÉ À L'INSPECTION VISUELLE DE LA SURFACE INTÉRIEURE D'UN PNEUMATIQUE ET PROCÉDÉ ASSOCIÉ**
BILDERFASSUNGSVORRICHTUNG ZUR VISUELLEN PRÜFUNG DER INNENFLÄCHE EINES REIFENS UND ZUGEHÖRIGES VERFAHREN
IMAGE ACQUISITION DEVICE FOR THE VISUAL INSPECTION OF THE INNER SURFACE OF A TYRE, AND ASSOCIATED METHOD

(30) Priorité: 26.09.2013 FR 1359263
(43) Date de publication de la demande: 03.08.2016
(73) Titulaire: Compagnie Générale des Etablissements Michelin, 63000 Clermont-Ferrand (FR)
(72) Inventeur: CHARLAT, Julien, F-63040 Clermont-Ferrand Cedex 09 (FR); LEOBAL, Christian, F-63040 Clermont-Ferrand Cedex 09 (FR)
(74) Mandataire: Roussy, Delphine
(86) Numéro de dépôt international: PCT/EP2014/070358
(87) Numéro de publication internationale: WO 2015/044196

(56) Documents cités:
- EP-A1- 2 431 734
- DE-U1- 9 405 098
- US-A1- 2005 264 796
- US-A1- 2012 134 656
- US-B1- 6 840 097

## Description

La présente invention concerne le domaine du contrôle visuel des pneumatiques.

Plus particulièrement, l'invention concerne les dispositifs utilisés pour l'acquisition d'images des pneumatiques afin de réaliser des opérations de contrôle visuel des surfaces de ces derniers.

L'inspection visuelle est largement développée dans le processus de fabrication des pneumatiques et fait encore le plus souvent appel à la dextérité des opérateurs chargés de vérifier l'absence d'imperfections visibles à la surface des pneumatiques pour s'assurer de leur conformité.

Cependant, avec l'avancée de la puissance de calcul des moyens informatiques, les manufacturiers de pneumatiques développent des moyens de contrôle automatique pour assister les opérateurs chargés du contrôle visuel. Dans ce but, il est possible d'utiliser un appareil d'inspection comprenant des moyens d'éclairage et des caméras disposés de sorte à balayer des zones extérieure et intérieure des bourrelets latéraux et de la bande de roulement du pneumatique à contrôler. Le champ de prise de vues de chaque caméra est limité angulairement. Pour obtenir des images complètes de l'intérieur et de l'extérieur du pneumatique, il convient d'entraîner en rotation le pneumatique autour de son axe par rapport aux moyens d'éclairage et aux caméras. Les images numériques obtenues sont alors traitées et comparées avec des images de référence afin de déterminer les éventuelles anomalies de surface et d'aspect du pneumatique. Pour plus de détails, on pourra par exemple se référer aux demandes de brevet EP-A2-1 959 227, EP-A1-2 023 078 et EP-A1-2 172 737. Par ailleurs, le brevet US6840097 décrit un dispositif d'acquisition d'images de la surface intérieure d'un pneumatique pourvu de deux moyens d'éclairage pour projeter un faisceau lumineux incident sur la surface intérieure du pneumatique, d'une caméra pour acquérir le faisceau lumineux réfléchi par le pneumatique, et d'un unique miroir positionné à la fois sur le trajet optique du faisceau lumineux incident et sur le trajet optique du faisceau lumineux réfléchi.

Pour réaliser une telle inspection avec une bonne précision, il est généralement utilisé un dispositif d'acquisition d'images équipé d'un moyen d'éclairage laser permettant de projeter sur le pneumatique un trait lumineux et d'une caméra matricielle apte à capter la lumière réfléchie par le pneumatique et qui est orientée selon un angle de triangulation. L'angle de triangulation est l'angle formé entre l'axe optique du moyen d'éclairage laser et l'axe optique de la caméra.

Afin de pouvoir détecter de très faibles imperfections à la surface du pneumatique, l'angle de triangulation généralement choisi est relativement grand. En conséquence, l'encombrement global du dispositif d'acquisition d'images est important.

Or, afin de pouvoir acquérir l'image complète d'au moins une moitié de la surface intérieure du pneumatique en une seule rotation de ce dernier, il est nécessaire d'installer une pluralité de dispositifs d'acquisition d'images pénétrant dans l'espace intérieur du pneumatique.

Compte tenu de l'encombrement global de chaque dispositif d'acquisition d'images, il peut être alors particulièrement délicat voire impossible de réaliser cette installation pour certaines tailles de pneumatiques, par exemple pour des pneumatiques de la gamme tourisme de dimensions courantes.

La présente invention vise à remédier à cet inconvénient.

Plus particulièrement, la présente invention vise à prévoir un dispositif d'acquisition d'images de la surface intérieure d'un pneumatique présentant un encombrement restreint et adapté pour être utilisé avec des pneumatiques de dimensions différentes, et notamment avec des pneumatiques ayant un diamètre inférieur ou égal à 15 pouces.

Dans un mode de réalisation, le dispositif d'acquisition d'images de la surface intérieure d'un pneumatique comprend au moins un module d'acquisition d'images pourvu d'au moins un moyen d'éclairage apte à projeter un faisceau lumineux sur une zone prédéterminée de la surface intérieure du pneumatique, d'au moins un moyen d'acquisition d'images apte à acquérir un faisceau lumineux réfléchi par ladite zone du pneumatique et issu du faisceau lumineux projeté, et d'au moins un réflecteur disposé optiquement entre le moyen d'éclairage et la zone prédéterminée de la surface intérieure du pneumatique et/ou entre ladite zone du pneumatique et le moyen d'acquisition d'images en considérant le sens de propagation du faisceau lumineux.

L'utilisation d'au moins un réflecteur associé au faisceau lumineux projeté et/ou au faisceau lumineux réfléchi par le pneumatique permet de réduire sensiblement l'encombrement de la partie du dispositif destinée à pénétrer dans l'espace intérieur du pneumatique à contrôler en repliant ledit(s) faisceau(x) lumineux. Le moyen d'éclairage et/ou le moyen d'acquisition d'images peuvent ainsi être positionnés axialement hors de cet espace intérieur.

Il est ainsi possible de disposer plusieurs modules d'acquisition d'images dans l'espace intérieur du pneumatique de façon simple et rapide pour réaliser l'inspection visuelle de la surface intérieure du pneumatique, et ce, même pour un pneumatique de faible diamètre.

Selon une première possibilité de montage, au moins un réflecteur est disposé optiquement entre le pneumatique et le moyen d'acquisition d'images, le moyen d'éclairage étant disposé et orienté de sorte à ce que le faisceau lumineux projeté éclaire directement le pneumatique, i.e. sans réflexion.

Selon une deuxième possibilité de montage, au moins un réflecteur est disposé optiquement entre le moyen d'éclairage et le pneumatique, le moyen d'acquisition d'images étant disposé et orienté de sorte à acquérir directement le faisceau lumineux réfléchi par le pneumatique.

Dans une autre disposition, au moins un réflecteur est intercalé optiquement entre le moyen d'éclairage et le pneumatique, et au moins un réflecteur distinct est intercalé optiquement entre ledit pneumatique et le moyen d'acquisition d'images.

Selon une autre disposition, au moins un réflecteur est disposé optiquement à la fois entre le moyen d'éclairage et le pneumatique et entre ledit pneumatique et le moyen d'acquisition d'images en considérant le sens de propagation du faisceau lumineux.

De préférence, ledit module d'acquisition comprend au moins un premier réflecteur disposé optiquement entre le moyen d'éclairage et la zone prédéterminée de la surface intérieure du pneumatique pour renvoyer le faisceau lumineux projeté vers ladite zone du pneumatique, et au moins un deuxième réflecteur disposé optiquement entre ladite zone du pneumatique et le moyen d'acquisition d'images pour renvoyer le faisceau lumineux réfléchi par le pneumatique vers ledit moyen d'acquisition. Lesdits réflecteurs sont destinés à être situés axialement dans l'espace intérieur du pneumatique, et le moyen d'acquisition d'images et/ou le moyen d'éclairage sont destinés à être situés axialement hors dudit espace.

Avantageusement, ledit module d'acquisition comprend en outre un troisième réflecteur disposé optiquement ladite zone du pneumatique et le deuxième réflecteur pour renvoyer le faisceau lumineux réfléchi par le pneumatique vers ledit deuxième réflecteur.

Dans un mode de réalisation, le dispositif comprend au moins des premier, deuxième et troisième modules d'acquisition d'images. Les premier et deuxième modules d'acquisition d'images peuvent comprendre chacun au moins des premier, deuxième et troisième réflecteurs, et le troisième module d'acquisition d'images comprend au moins des premier et deuxième réflecteurs, lesdits modules étant aptes à acquérir une moitié de la surface intérieure du pneumatique.

De préférence, le ou les modules d'acquisition comprennent chacun un support sur lequel sont montés le moyen d'éclairage, le moyen d'acquisition d'images et le(s)dit(s) réflecteur(s) associés. Le moyen d'éclairage et le moyen d'acquisition d'images associés peuvent être montés sur des faces opposées dudit support.

De préférence, le support s'étend selon un axe d'allongement sensiblement parallèle à l'axe optique du moyen d'acquisition d'images.

Dans un mode de réalisation préféré, ledit moyen d'éclairage comprend un laser apte à projeter un trait lumineux sur la zone prédéterminée de la surface intérieure du pneumatique et ledit moyen d'acquisition d'images comprend une caméra matricielle. Le ou les réflecteurs peuvent être constitués chacun par un miroir de repli, de préférence plan.

L'invention concerne également un procédé d'inspection d'un pneumatique du type comprenant une bande de roulement et des bourrelets latéraux comprenant les étapes au cours desquelles on entraîne en rotation le pneumatique autour de son axe par l'intermédiaire d'un des bourrelets latéraux, on maintien au moins axialement en position l'autre bourrelet latéral du pneumatique pendant l'entraînement en rotation, et on acquiert des images de la surface intérieure du pneumatique à l'aide d'un dispositif d'acquisition d'images tel que défini précédemment. Avantageusement, on positionne le dispositif d'acquisition d'images du côté du bourrelet latéral du pneumatique maintenu axialement pendant l'entraînement en rotation.

La présente invention sera mieux comprise à la lecture de la description détaillée d'un mode de réalisation pris à titre d'exemple nullement limitatif et illustré par les dessins annexés sur lesquels :
- la figure 1 est une vue en perspective d'un dispositif d'acquisition d'images de la surface intérieure d'un pneumatique selon un exemple de réalisation de l'invention,
- les figures 2 et 3 sont des vues en perspective d'un premier module d'acquisition du dispositif de la figure 1,
- les figures 4 et 5 sont des vues en perspective d'un deuxième module d'acquisition du dispositif de la figure 1, et
- les figures 6 et 7 sont des vues en perspective d'un troisième module d'acquisition du dispositif de la figure 1.

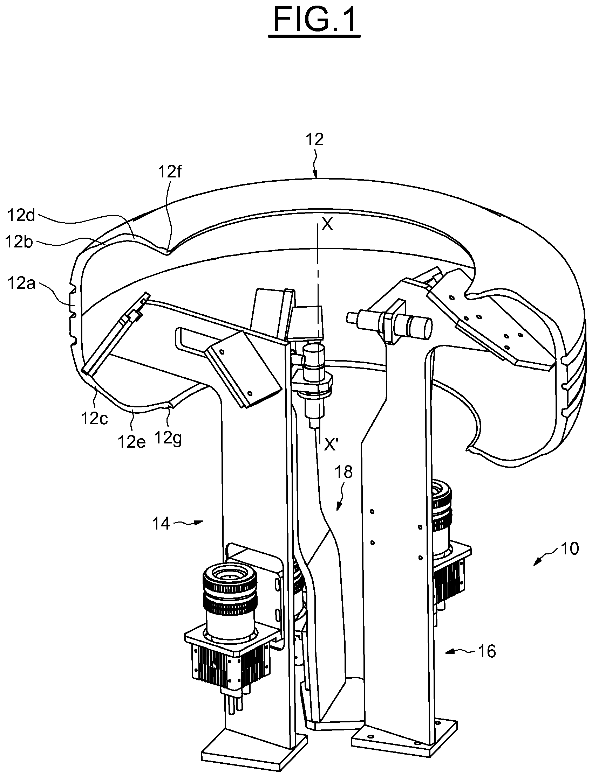

Sur la figure 1, on a représenté un exemple de réalisation d'un dispositif, référencé 10 dans son ensemble, prévu pour l'acquisition d'images d'une moitié de la surface intérieure d'un pneumatique 12 et comprenant trois modules 14 à 18 d'acquisition.

Dans l'exemple de réalisation illustré, le pneumatique 12, d'axe X-X', est représenté dans une position supposée verticale dudit axe. Le pneumatique 12, de forme annulaire, comprend une bande de roulement 12a cylindrique prolongée par des premières et secondes épaules 12b, 12c latérales opposées elles-mêmes prolongées par des flancs 12d, 12e puis par des bourrelets 12f, 12g latéraux. Tel qu'illustré, le dispositif 10 permet l'inspection de la moitié de la surface intérieure du pneumatique située entre le plan de symétrie du pneumatique et le bourrelet 12g inférieur.

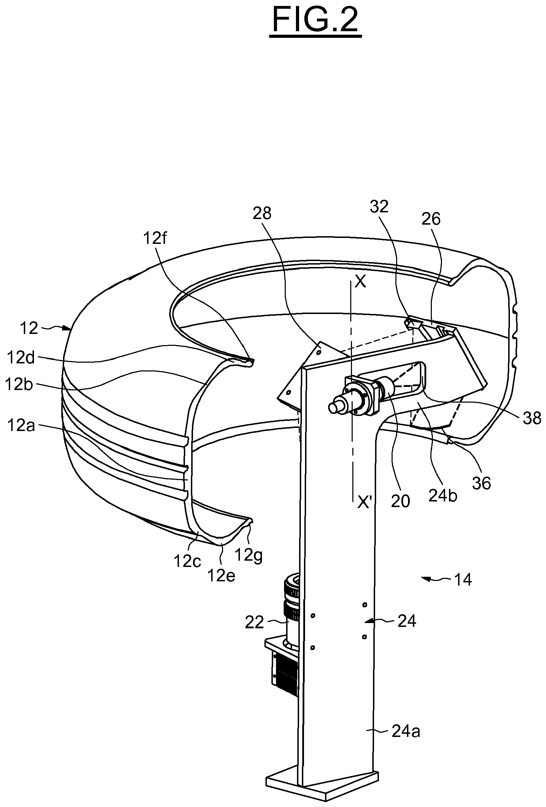

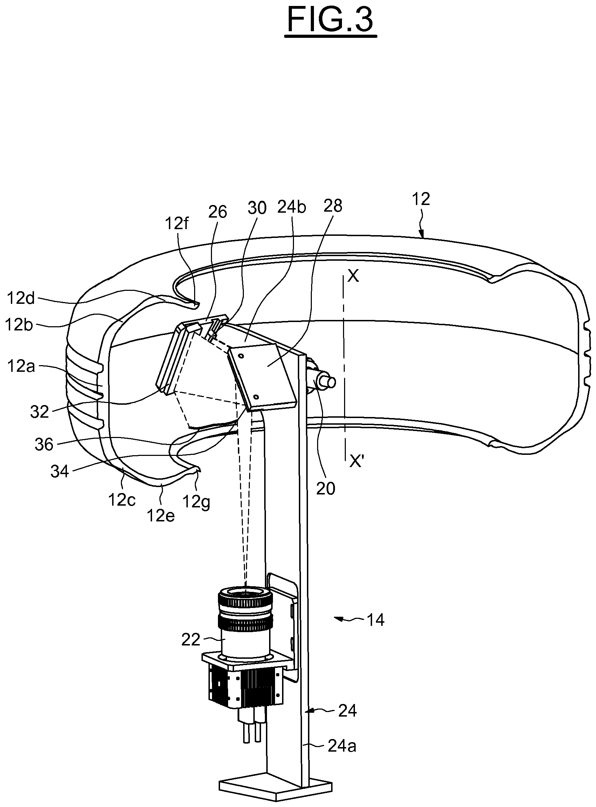

Comme illustré plus visiblement aux figures 2 et 3, le premier module 14 d'acquisition d'images comprend un moyen d'éclairage 20 pour projeter un faisceau lumineux incident sur la surface intérieure du pneumatique 12, une caméra 22 pour acquérir un faisceau lumineux réfléchi par ladite surface intérieure, et un support 24 commun sur lequel sont fixés le moyen d'éclairage 20 et la caméra 22. Le moyen d'éclairage 20 est de préférence du type laser ou lumière de fente formant un plan lumineux et dont l'intersection avec la surface intérieure du pneumatique 12 forme un trait. La caméra 22 est de préférence matricielle.

Le support 24 comprend un partie principale 24a s'étendant selon l'axe X-X' du pneumatique et qui est prolongée à une extrémité supérieure par une partie d'extrémité 24b latérale. La partie d'extrémité 24b est située axialement dans l'espace intérieur du pneumatique 12. Le moyen d'éclairage 20 est fixé sur la partie d'extrémité 24b et la caméra 22 est fixée sur la partie principale 24a du support. Le moyen d'éclairage 20 et la caméra 22 sont fixés sur des faces opposées du support 24.

Le module 14 comprend également des première et seconde embases 26, 28 de montage disposées sur le support 24 et sur lesquelles sont fixés des miroirs 30 à 34. L'embase 26 de montage est fixée à l'extrémité libre de la partie d'extrémité 24b du support et s'étend dans l'espace intérieur du pneumatique 12 en restant radialement à distance de celui-ci. L'embase 26 s'étend latéralement du côté de l'embase 28 et de la caméra 22. L'embase 28 de montage est fixée dans la zone de raccordement de la partie d'extrémité 24b et de la partie principale 24a du support.

Le miroir 30 est fixé sur l'embase 26 et situé axialement dans l'espace intérieur du pneumatique 12 et radialement entre le moyen d'éclairage 20 et la surface intérieure du pneumatique. Le miroir 30 est positionné sur le trajet optique du faisceau lumineux qui est projeté par le moyen d'éclairage 20 selon une direction de propagation sensiblement radiale. Le miroir 30 est incliné par rapport à l'axe optique du moyen d'éclairage 20 pour renvoyer le faisceau lumineux projeté vers une zone prédéterminée de la surface intérieure du pneumatique 12 qui est située sur le flanc 12e et sur le bourrelet 12g latéral du pneumatique. Le faisceau lumineux projeté forme un trait 36 sur le pneumatique 12. Un évidement 38 traversant est ménagé dans l'épaisseur de la partie d'extrémité 24b du support pour permettre la propagation du faisceau lumineux incident en direction du miroir 30 qui est situé latéralement du côté opposé au moyen d'éclairage 20 par rapport au support 24.

Le miroir 32 est fixé sur l'embase 26 de montage de façon adjacente au miroir 30 du côté opposé au support 24. Le miroir 32 est situé axialement dans l'espace intérieur du pneumatique 12. Le faisceau lumineux issu du moyen d'éclairage 20 et réfléchi par la surface intérieure du pneumatique 12 éclaire le miroir 32 qui renvoie vers l'intérieur le faisceau en direction du miroir 34 selon une direction de propagation sensiblement radiale. Le miroir 34 fixé sur l'embase 28 est positionné sur le trajet optique du faisceau lumineux réfléchi par le miroir 32 et incliné de sorte à renvoyer ledit faisceau vers la caméra 22 selon une direction de propagation sensiblement axiale. Le miroir 34 est situé axialement dans l'espace intérieur du pneumatique 12 et décalé radialement vers l'intérieur par rapport aux miroirs 30, 32.

Dans l'exemple de réalisation illustré, l'axe optique du moyen d'éclairage 20 est orienté sensiblement radialement en considérant l'axe X-X' du pneumatique. Le moyen d'éclairage 20 est situé axialement dans l'espace intérieur du pneumatique 12. Le miroir 30 est incliné par rapport à l'axe optique du moyen d'éclairage 20 de sorte à renvoyer le faisceau lumineux émis sur le flanc 12e et sur le bourrelet 12g du pneumatique. Ensuite, le faisceau lumineux réfléchi par le pneumatique 12 se dirige vers le miroir 32 qui est orienté de sorte à renvoyer ledit faisceau vers le miroir 34 qui réfléchit le faisceau vers la caméra 22. L'axe optique de l'objectif de la caméra 22 s'étend sensiblement axialement. La caméra 22 est située axialement hors de l'espace intérieur du pneumatique 12. La caméra 22 est ici décalée axialement vers le bas par rapport au pneumatique 12. Sur les figures 2 et 3, le faisceau lumineux projeté et les faisceaux lumineux réfléchis sont illustrés en pointillés. Deux types différents de pointillés sont représentés pour illustrer les faisceaux lumineux avant réflexion sur le pneumatique 12 et après réflexion.

Le deuxième module 16 d'acquisition d'images du dispositif présente une structure similaire à celle du premier module 14. Le module 16 est prévu pour l'inspection d'une zone située sur l'épaule 12c et sur le flanc 12e du pneumatique.

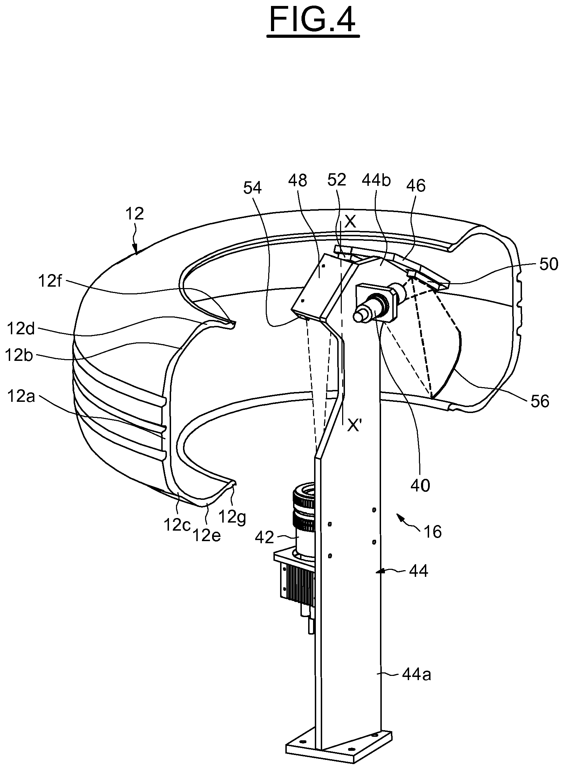

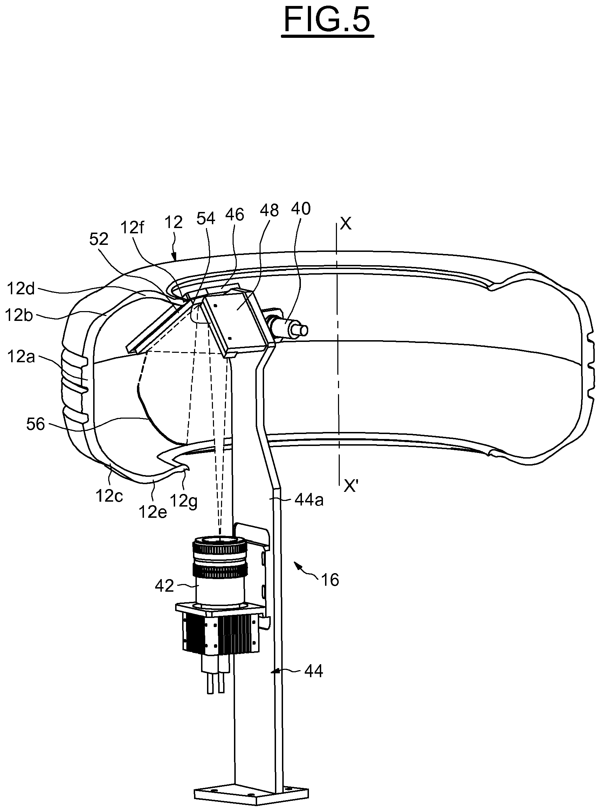

Comme illustré aux figures 4 et 5, le module 16 comprend un moyen d'éclairage 40, une caméra 42, un support 44 commun sur lequel sont fixés le moyen d'éclairage 40 et la caméra 42, des première et seconde embases 46, 48 de montage disposées sur le support et sur lesquelles sont fixés des miroirs 50 à 54. Le moyen d'éclairage 40 et la caméra 42 sont fixés et disposés sur le support 44 de façon identique au moyen d'éclairage 20 et la caméra 22 du module 14 d'acquisition d'images précédemment décrit. Le moyen d'éclairage 40 est de préférence du type laser ou lumière de fente et la caméra 42 est de préférence matricielle.

L'embase 46 de montage est fixée à l'extrémité libre de la partie d'extrémité 44b du support et s'étend dans l'espace intérieur du pneumatique 12 en restant radialement à distance de celui-ci. L'embase 46 s'étend latéralement de part et d'autre du support 40. De façon similaire au module 14, l'embase 48 de montage est fixée dans la zone de raccordement de la partie d'extrémité 44b et de la partie principale 44a du support.

Le miroir 50 est fixé sur l'embase 46 et situé axialement dans l'espace intérieur du pneumatique 12 et radialement entre le moyen d'éclairage 40 et la surface intérieure du pneumatique. Le miroir 50 est situé du côté du moyen d'éclairage 40 par rapport au support 44 et positionné sur le trajet optique du faisceau lumineux projeté par ledit moyen d'éclairage selon une direction de propagation sensiblement radiale. Le miroir 50 est incliné par rapport à l'axe optique du moyen d'éclairage 40 pour renvoyer le faisceau lumineux projeté et former un trait 56 sur l'épaule 12c et sur le flanc 12e du pneumatique. Le miroir 52 est fixé sur l'embase 46 de montage du côté opposé au miroir 50 par rapport au support 44. Le miroir 52 est situé axialement dans l'espace intérieur du pneumatique 12. Le miroir 52 est positionné sur le trajet optique du faisceau lumineux réfléchi par le pneumatique 12 qui renvoie à son tour ledit faisceau en direction du miroir 54 selon une direction de propagation sensiblement radiale. Le miroir 54 est situé axialement dans l'espace intérieur du pneumatique 12 en étant décalé radialement vers l'intérieur par rapport aux miroirs 50, 52. Le faisceau lumineux réfléchi par le miroir 52 est renvoyé par le miroir 54 vers la caméra 42 selon une direction de propagation sensiblement axiale. Le miroir 54 est incliné par rapport à l'axe optique de la caméra 42.

Le troisième module 18 d'acquisition d'images du dispositif est prévu pour l'inspection d'une zone située sur la bande de roulement 12a de la surface intérieure du pneumatique. Par rapport aux autres modules 14 et 16 précédemment décrits, le module 18 diffère principalement en ce qu'un seul réflecteur est prévu pour replier le faisceau lumineux après réflexion sur le pneumatique 12.

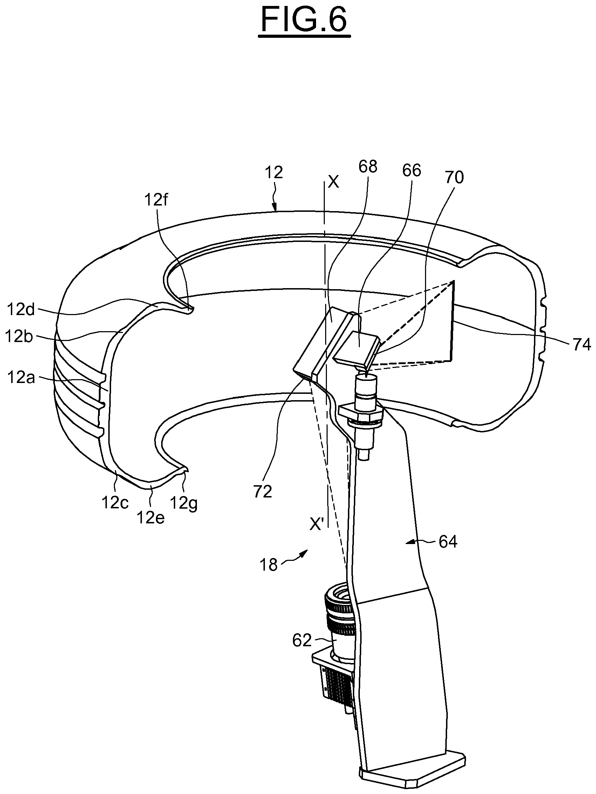

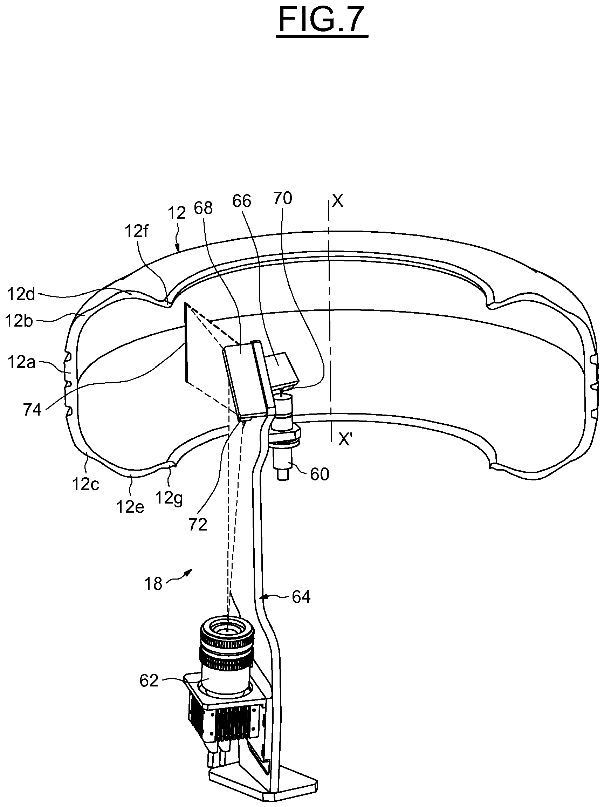

Comme illustré aux figures 6 et 7, le module 18 comprend un moyen d'éclairage 60, une caméra 62, un support 64 commun sur lequel sont fixés le moyen d'éclairage 60 et la caméra 62, des première et seconde embases 66, 68 de montage disposées sur le support et sur chacune desquelles est fixé un unique miroir 70, 72. La caméra 62 est fixée et disposée sur le support 64 de façon identique aux caméras 22, 42 des modules 14, 16 d'acquisition d'images précédemment décrits. L'axe optique du moyen d'éclairage 60 est orienté sensiblement axialement de sorte à émettre un faisceau lumineux selon une direction de propagation sensiblement axiale. Le moyen d'éclairage 60 est situé axialement dans l'espace intérieur du pneumatique 12. Le moyen d'éclairage 60 est de préférence du type laser ou lumière de fente et la caméra 62 est de préférence matricielle.

Les embases 66, 68 de montage sont fixées au voisinage de l'extrémité supérieure du support 64 et s'étendent dans l'espace intérieur du pneumatique 12 en restant radialement à distance de celui-ci. Les embases 66, 68 sont fixées latéralement de part et d'autre du support 64. Le miroir 70 est situé axialement au-dessus du moyen d'éclairage 60 et est incliné par rapport à l'axe optique dudit moyen pour renvoyer le faisceau lumineux projeté selon une direction de propagation sensiblement radiale et former un trait 74 sur la bande de roulement 12a du pneumatique. Le miroir 72 est situé axialement dans l'espace intérieur du pneumatique 12 et positionné sur le trajet optique du faisceau lumineux réfléchi par le pneumatique 12 qui renvoie à son tour ledit faisceau en direction de la caméra 62 selon une direction de propagation sensiblement axiale. Le miroir 72 est incliné par rapport à l'axe optique de la caméra 62.

Le dispositif 10 comprend ainsi trois modules 14 à 18 séparés et équipés chacun d'au moins un miroir de repli associé au moyen d'éclairage pour éclairer une zone spécifique de la surface intérieure du pneumatique 12, et d'au moins un miroir de repli distinct associé à la caméra et disposé de sorte que celle-ci puisse acquérir la lumière réfléchi par ladite zone du pneumatique après renvoi par ledit miroir. Ces réflecteurs permettent respectivement de replier le faisceau lumineux entre d'une part le moyen d'éclairage et le pneumatique et d'autre part ledit pneumatique et la caméra.

L'encombrement de chaque module 14 à 18 du dispositif dans l'espace intérieur délimité par le pneumatique 12 est limité dans la mesure où la caméra dudit module est positionnée axialement hors dudit espace. Les modules 14 à 18 peuvent être installés aisément dans l'espace intérieur du pneumatique 12, et ce, même pour un pneumatique de diamètre relativement faible par exemple inférieur ou égal à 15 pouces. On peut ainsi réaliser l'inspection visuelle de la moitié inférieure de la surface intérieure du pneumatique 12 en une seule rotation dudit pneumatique autour de l'axe X-X'.

Pour réaliser cette inspection à l'aide du dispositif 10, on procède de préférence de la manière suivante. Dans une première étape, on centre et on verrouille le premier bourrelet 12f latéral du pneumatique sur un moyen d'entraînement en rotation. Ensuite, lors d'une seconde étape, on maintien en position axialement le second bourrelet 12g latéral par exemple à l'aide d'un préhenseur à galets. Lors d'une troisième étape suivante, on fait pénétrer partiellement le dispositif 10 dans l'espace intérieur du pneumatique 12 et on le positionne de sorte à pourvoir inspecter la moitié inférieure de la surface intérieure du pneumatique 12 située entre le plan de symétrie dudit pneumatique et le second bourrelet 12g. Ensuite, lors d'une quatrième étape, on entraîne en rotation le pneumatique 12 afin que le dispositif 10 qui est fixe acquière l'ensemble des images permettant de former l'image complète de la moitié inférieure de la surface intérieure du pneumatique 12.

Le pneumatique 12 peut alors être retourné afin de recommencer la séquence d'opérations telle que décrite ci-dessus pour acquérir l'image de la seconde moitié de la surface intérieure. On obtient alors l'image complète de la surface intérieure du pneumatique 12 en juxtaposant les première et seconde images obtenues. Simultanément à l'obtention des images de la surface intérieure du pneumatique, il est possible d'acquérir des images de la surface extérieure du pneumatique avec un autre dispositif d'acquisition d'images spécifique.

Dans l'exemple de réalisation illustré, uniquement la caméra de chaque module d'acquisition est déportée hors de l'espace intérieur du pneumatique. Le moyen d'éclairage et les miroirs de renvoi de chaque module d'acquisition sont situés axialement dans ledit espace intérieur. En variante, il est possible de positionner également le moyen d'éclairage de chaque module d'acquisition axialement hors de l'espace intérieur du pneumatique de sorte à réduire encore l'encombrement du dispositif dans cette zone. Dans une autre variante de réalisation, il peut être envisageable de déporter le moyen d'éclairage de chaque module hors de l'espace intérieur du pneumatique 12 et de faire pénétrer la caméra associée dans ledit espace, par exemple si celle-ci présente un faible encombrement par rapport à celui du moyen d'éclairage.

Comme indiqué précédemment, dans l'exemple de réalisation illustré, chaque module d'acquisition du dispositif comprend au moins un miroir situé optiquement entre le moyen d'éclairage et le pneumatique, et au moins un miroir distinct situé optiquement entre ledit pneumatique et le moyen d'acquisition d'images. Les miroirs formant réflecteurs sont distincts du pneumatique. En variante, il est par exemple envisageable, sans sortir du cadre de la présente invention, de prévoir pour chaque module d'acquisition un unique miroir associé au moyen d'acquisition d'images et d'orienter le moyen d'éclairage de sorte à ce que le faisceau lumineux projeté éclaire directement la zone de la surface intérieure du pneumatique à inspecter. Une disposition inversée pourrait également être envisagée. Dans une autre variante de réalisation, il pourrait encore être possible, pour chaque module d'acquisition, d'utiliser chaque miroir à la fois pour la réflexion du faisceau émis par le moyen d'éclairage et la réflexion du faisceau réfléchi par le pneumatique. Dans ce cas, ledit miroir est intercalé optiquement à la fois entre le moyen d'éclairage et la zone prédéterminée de la surface intérieure du pneumatique, et entre ladite zone du pneumatique et le moyen d'acquisition d'images. Cependant, une telle solution peut être plus complexe à mettre en œuvre.

Le dispositif d'acquisition tel qu'illustré sur les figures est utilisé selon une orientation à axe vertical du pneumatique. Le dispositif peut également être utilisé selon une orientation à axe horizontal ou à axe oblique.

## Revendications

1. Dispositif d'acquisition d'images de la surface intérieure d'un pneumatique comprenant au moins un module d'acquisition (14) d'images pourvu d'au moins un moyen d'éclairage (20) apte à projeter un faisceau lumineux sur une zone prédéterminée de la surface intérieure du pneumatique, et d'au moins un moyen d'acquisition (22) d'images apte à acquérir un faisceau lumineux réfléchi par ladite zone du pneumatique et issu du faisceau lumineux projeté, **caractérisé en ce que** ledit module comprend au moins un premier réflecteur (30) disposé optiquement entre le moyen d'éclairage (20) et la zone prédéterminée de la surface intérieure du pneumatique pour renvoyer le faisceau lumineux projeté vers ladite zone du pneumatique, et au moins un deuxième réflecteur (34) disposé optiquement entre ladite zone du pneumatique et le moyen d'acquisition (22) d'images pour renvoyer le faisceau lumineux réfléchi par le pneumatique vers ledit moyen d'acquisition, lesdits réflecteurs (30, 34) étant destinés à être situés axialement dans l'espace intérieur du pneumatique et le moyen d'acquisition (22) d'images et/ou le moyen d'éclairage (20) étant destinés à être situés axialement hors dudit espace.

2. Dispositif selon la revendication 1, dans lequel ledit module d'acquisition comprend en outre un troisième réflecteur (32) disposé optiquement entre ladite zone du pneumatique et le deuxième réflecteur (34) pour renvoyer le faisceau lumineux réfléchi par le pneumatique vers ledit deuxième réflecteur.

3. Dispositif selon l'une quelconque des revendications précédentes, comprenant au moins des premier, deuxième et troisième modules d'acquisition (14, 16, 18) d'images.

4. Dispositif selon la revendication 3 dépendante de la revendication 2, dans lequel les premier et deuxième modules d'acquisition (14 ; 16) d'images comprennent chacun au moins des premier, deuxième et troisième réflecteurs (30, 34, 32 ; 50, 54, 52), et le troisième module d'acquisition (18) d'images comprend au moins des premier et deuxième réflecteurs (70, 72), lesdits modules étant aptes à acquérir une moitié de la surface intérieure du pneumatique.

5. Dispositif selon l'une quelconque des revendications précédentes, dans lequel le ou les modules d'acquisition comprennent chacun un support (24, 44, 64) sur lequel sont montés le moyen d'éclairage, le moyen d'acquisition d'images et le(s)dit(s) réflecteur(s) associés.

6. Dispositif selon la revendication 5, dans lequel le moyen d'éclairage (20) et le moyen d'acquisition (22) d'images associés sont montés sur des faces opposées dudit support.

7. Dispositif selon la revendication 5 ou 6, dans lequel le support (14) s'étend selon un axe d'allongement sensiblement parallèle à l'axe optique du moyen d'acquisition (22) d'images.

8. Dispositif selon l'une quelconque des revendications précédentes, dans lequel ledit moyen d'éclairage comprend un laser apte à projeter un trait lumineux sur la zone prédéterminée de la surface intérieure du pneumatique, et ledit moyen d'acquisition d'images comprend une caméra matricielle.

9. Dispositif selon l'une quelconque des revendications précédentes, dans lequel le ou les réflecteurs sont constitués chacun par un miroir de repli, de préférence plan.

10. Procédé d'inspection de la surface intérieure d'un pneumatique du type comprenant une bande de roulement et des bourrelets latéraux comprenant les étapes au cours desquelles on entraîne en rotation le pneumatique autour de son axe par l'intermédiaire d'un des bourrelets latéraux, on maintien au moins axialement en position l'autre bourrelet latéral du pneumatique pendant l'entraînement en rotation, et on acquiert des images de la surface intérieure du pneumatique à l'aide d'un dispositif d'acquisition d'images selon l'une quelconque des revendications précédentes.

11. Procédé selon la revendication 10, dans lequel on positionne le dispositif d'acquisition d'images du côté du bourrelet latéral du pneumatique maintenu axialement pendant l'entraînement en rotation.

## Patentansprüche

1. Vorrichtung zur Erfassung von Bildern der Innenfläche eines Reifens, welche wenigstens ein Bilderfassungsmodul (14) umfasst, das mit wenigstens einem Beleuchtungsmittel (20), das in der Lage ist, ein Lichtbündel auf einen vorbestimmten Bereich der Innenfläche des Reifens zu projizieren, und mit wenigstens einem Bilderfassungsmittel (22), das in der Lage ist, ein von dem Bereich des Reifens reflektiertes und von dem projizierten Lichtbündel stammendes Lichtbündel zu erfassen, versehen ist, **dadurch gekennzeichnet, dass** das Modul wenigstens einen ersten Reflektor (30) umfasst, der optisch zwischen dem Beleuchtungsmittel (20) und dem vorbestimmten Bereich der Innenfläche des Reifens angeordnet ist, um das projizierte Lichtbündel zu dem Bereich des Reifens umzulenken, und wenigstens einen zweiten Reflektor (34), der optisch zwischen dem Bereich des Reifens und dem Bilderfassungsmittel (22) angeordnet ist, um das von dem Reifen reflektierte Lichtbündel zu dem Erfassungsmittel umzulenken, wobei die Reflektoren (30, 34) dazu bestimmt sind, sich axial im inneren Raum des Reifens zu befinden, und das Bilderfassungsmittel (22) und/oder das Beleuchtungsmittel (20) dazu bestimmt sind, sich axial außerhalb dieses Raumes zu befinden.

2. Vorrichtung nach Anspruch 1, wobei das Erfassungsmodul außerdem einen dritten Reflektor (32) umfasst, der optisch zwischen dem Bereich des Reifens und dem zweiten Reflektor (34) angeordnet ist, um das von dem Reifen reflektierte Lichtbündel zu dem zweiten Reflektor umzulenken.

3. Vorrichtung nach Anspruch 1 oder 2, welche wenigstens ein erstes, ein zweites und ein drittes Bilderfassungsmodul (14, 16, 18) umfasst.

4. Vorrichtung nach Anspruch 3, wenn abhängig von Anspruch 2, wobei das erste und das zweite Bilderfassungsmodul (14; 16) jeweils wenigstens einen ersten, einen zweiten und einen dritten Reflektor (30, 34, 32; 50, 54, 52) umfassen und das dritte Bilderfassungsmodul (18) wenigstens einen ersten und einen zweiten Reflektor (70, 72) umfasst, wobei diese Module in der Lage sind, eine Hälfte der Innenfläche des Reifens zu erfassen.

5. Vorrichtung nach einem der vorhergehenden Ansprüche, wobei das oder die Erfassungsmodule jeweils eine Stütze (24, 44, 64) umfassen, an welcher das zugeordnete Beleuchtungsmittel, das zugeordnete Bilderfassungsmittel und der (die) zugeordnete(n) Reflektor(en) angebracht sind.

6. Vorrichtung nach Anspruch 5, wobei das zugeordnete Beleuchtungsmittel (20) und das zugeordnete Bilderfassungsmittel (22) auf entgegengesetzten Seiten der Stütze angebracht sind.

7. Vorrichtung nach Anspruch 5 oder 6, wobei sich die Stütze (14) entlang einer Längsachse erstreckt, die im Wesentlichen parallel zur optischen Achse des Bilderfassungsmittels (22) ist.

8. Vorrichtung nach einem der vorhergehenden Ansprüche, wobei das Beleuchtungsmittel einen Laser umfasst, der in der Lage ist, einen Lichtstrich auf den vorbestimmten Bereich der Innenfläche des Reifens zu projizieren, und das Bilderfassungsmittel eine Matrixkamera umfasst.

9. Vorrichtung nach einem der vorhergehenden Ansprüche, wobei der oder die Reflektoren jeweils aus einem vorzugsweise ebenen Faltspiegel bestehen.

10. Verfahren zur Inspektion der Innenfläche eines Reifens des Typs, welcher einen Laufstreifen und seitliche Wülste umfasst, welches die Schritte umfasst, in denen der Reifen über einen der seitlichen Wülste um seine Achse drehend angetrieben wird, der andere seitliche Wulst des Reifens während des Drehantriebs wenigstens axial in Position gehalten wird und Bilder der Innenfläche des Reifens mithilfe einer Vorrichtung zur Erfassung von Bildern nach einem der vorhergehenden Ansprüche erfasst werden.

11. Verfahren nach Anspruch 10, wobei die Vorrichtung zur Erfassung von Bildern auf der Seite des seitlichen Wulstes des Reifens positioniert wird, der während des Drehantriebs axial gehalten wird.

## Claims

1. Device for acquiring images of the interior surface of a tyre comprising at least one image acquisition module (14) provided with at least one lighting means (20) able to project a beam of light onto a predetermined zone of the interior surface of the tyre, and with at least one image acquisition means (22) able to acquire a beam of light reflected off the said zone of the tyre and originating from the projected beam of light, **characterized in that** the said module comprises at least a first reflector (30) positioned optically between the light means (20) and the predetermined zone of the interior surface of the tyre to reflect the projected beam of light towards the said zone of the tyre and at least a second reflector (34) positioned optically between the said zone of the tyre and the image acquisition means (22) to reflect the beam of light reflected off the tyre towards the said acquisition means, the said reflectors (30, 34) being intended to be situated axially inside the interior space of the tyre and the image acquisition means (22) and/or the lighting means (20) being intended to be situated axially outside the said space..

2. Device according to Claim 1, in which the said acquisition module further comprises a third reflector (32) positioned optically between the said zone of the tyre and the second reflector (34) so as to reflect the beam of light reflected off the tyre towards the said second reflector.

3. Device according to claim 1 or 2, comprising at least first, second and third image acquisition modules (14, 16, 18).

4. Device according to Claim 3 dependent on Claim 2, in which the first and second image acquisition modules (14; 16) each comprise at least first, second and third reflectors (30, 34, 32; 50, 54, 52) and the third image acquisition module (18) comprises at least first and second reflectors (70, 72), the said modules being able to capture half of the interior surface of the tyre.

5. Device according to any one of the preceding claims, in which the acquisition module or modules each comprise a support (24, 44, 64) on which the associated lighting means, the associated image acquisition means and the said associated reflector(s) are mounted.

6. Device according to Claim 5, in which the associated lighting means (20) and image acquisition means (22) are mounted on opposite faces of the said support.

7. Device according to Claim 5 or 6, in which the support (14) extends along an axis of elongation substantially parallel to the optical axis of the image acquisition means (22).

8. Device according to any one of the preceding claims, in which the said lighting means comprises a laser able to project a line of light onto the predetermined zone of the interior surface of the tyre, and the said image acquisition means comprises a matrix camera.

9. Device according to any one of the preceding claims, in which the reflector or reflectors each consist of a folding-optics mirror, preferably planar.

10. Method for inspecting the interior surface of a tyre of the type comprising a tread and lateral beads, comprising steps during which the tyre is rotated about its axis via one of the lateral beads, the other lateral bead of the tyre is held at least axially in position during the rotational drive, and images of the interior surface of the tyre are captured using an image acquisition device according to any one of the preceding claims.

11. Method according to Claim 10, in which the image acquisition device is positioned on the side of the lateral bead of the tyre that is held axially during the rotational drive.
